# EUROPÄISCHE PATENTANMELDUNG

(11) **EP 4 050 680 A1**
(43) Veröffentlichungstag der Anmeldung: **31.08.2022**
(21) Anmeldenummer: 21162904.3
(22) Anmeldetag: 16.03.2021
(51) Int. Cl.: H01M 4/139, G01N 27/04, G01N 27/06, H01M 10/42, G01N 27/20

(54) **COMPUTERGESTÜTZTES VERFAHREN ZUR ANALYSE EINER ROH-SUSPENSION FÜR EINE ELEKTRODENSCHICHT, HERSTELLUNGSVERFAHREN EINES BATTERIESPEICHERS UND HERSTELLUNGSEINHEIT**

(30) Priorität: 26.02.2021 EP 21159625
(71) Anmelder: Siemens Aktiengesellschaft, 80333 München (DE)
(72) Erfinder: Schulte, Sascha, 91315 Höchstadt (DE)

(57) **Zusammenfassung**

Die Erfindung betrifft ein Verfahren zur Analyse einer Roh-Suspension für eine Elektrodenschicht eines Batteriespeichers. Zunächst erfolgt das Bereitstellen einer dielektrischen Spektroskopie-Einheit zum Messen dielektrischer Eigenschaften der Roh-Suspension. Anschließend erfolgt das Messen einer ersten dielektrischen Eigenschaft der Roh-Suspension. Basierend auf dem Messen werden Messdaten erzeugt. Diese Messdaten werden an eine Recheneinheit übermittelt. Anschließend wird ein Qualitätswert der Roh-Suspension in Abhängigkeit der Messdaten der ersten dielektrischen Eigenschaft der Roh-Suspension in der Recheneinheit ermittelt. Die Erfindung betrifft auch ein Herstellungsverfahren eines Batteriespeichers. Zunächst wird die Roh-Suspension für das Herstellen der Elektrodenschicht gemäß dem Verfahren zur Analyse der Roh-Suspension analysiert. Anschließend wird wenigstens einer Herstellungsbedingung zum Herstellen der Elektrodenschicht basierend auf einem ersten und/oder zweiten Qualitätswert angepasst.

## Beschreibung

Die Erfindung betrifft ein Verfahren zur Analyse einer Roh-Suspension einer Elektrodenschicht eines Batteriespeichers, ein Herstellungsverfahren eines Batteriespeichers, eine Herstellungseinheit und ein Computerprogrammprodukt.

Lithium-Ionen-Akkumulatoren, im Folgenden auch Lithium-Ionen-Batterien genannt, werden aufgrund ihrer hohen Leistungsdichte und Energiedichte in mobilen und stationären Anwendungen als Energiespeicher eingesetzt.

Eine Lithium-Ionen-Batterie umfasst typischerweise mehrere Batteriezellen. Eine Batteriezelle, insbesondere eine Lithium-Ionen-Batteriezelle, umfasst eine Vielzahl von Schichten. Typischerweise umfassen diese Schichten Anoden, Kathoden, Separatoren und weitere Elemente. Diese Schichten können als Stapel oder als Wicklungen ausgestaltet sein.

Die Elektroden umfassen üblicherweise Metallfolien, insbesondere umfassend Kupfer und/oder Aluminium, welche mit einem Aktivmaterial beschichtet werden. Als Aktivmaterial wird dabei typischerweise eine lithiumhaltige Paste, Slurry genannt, aufgetragen. Die Folien und die Beschichtung weisen jeweils eine Dicke von einigen Mikrometern auf. Dadurch haben bereits einige Mikrometer Abweichung der Dicke der Beschichtung oder bei Materialeigenschaften negative Auswirkungen auf die Qualität der Elektrode. Nachteilig werden bei unregelmäßiger Beschichtung somit qualitativ minderwertige Batteriezelle hergestellt. Weiterhin ist ein sicheres Betreiben der Batteriezelle nachteilig nicht sichergestellt.

Nachteilig wird daher ein großer Anteil Ausschuss während der Batterieproduktion erzeugt. Somit weist der Produktionsprozess einen großen Materialbedarf und Energiebedarf auf, um eine ausreichende Menge qualitativ hochwertiger Batteriezellen zu produzieren.

Es ist somit Aufgabe der vorliegenden Erfindung, ein Verfahren zur Analyse, ein Herstellungsverfahren eines Batteriespeichers, eine Herstellungseinheit und ein Computerprogrammprodukt bereitzustellen, welche eine Ausschussquote der Batterieherstellung reduzieren.

Die Aufgabe wird erfindungsgemäß mit einem Verfahren zur Analyse einer Roh-Suspension gemäß Anspruch 1, mit einem Herstellungsverfahren gemäß Anspruch 10, einer Herstellungseinheit gemäß Anspruch 12 und einem Computerprogrammprodukt gemäß Anspruch 13 gelöst.

Das erfindungsgemäße computergestützte Verfahren zur Analyse einer Roh-Suspension für eine Elektrodenschicht eines Batteriespeichers umfasst mehrere Schritte. Zunächst erfolgt das Bereitstellen einer dielektrischen Spektroskopie-Einheit zum Messen dielektrischer Eigenschaften der Roh-Suspension. Anschließend erfolgt das Messen einer ersten dielektrischen Eigenschaft der Roh-Suspension. Basierend auf dem Messen werden Messdaten erzeugt. Diese Messdaten werden an eine Recheneinheit übermittelt. Anschließend wird ein Qualitätswert der Roh-Suspension in Abhängigkeit der Messdaten der ersten dielektrischen Eigenschaft der Roh-Suspension in der Recheneinheit ermittelt.

Das erfindungsgemäße Herstellungsverfahren eines Batteriespeichers umfasst mehrere Schritte. Zunächst wird die Roh-Suspension für das Herstellen der Elektrodenschicht gemäß dem erfindungsgemäßen Verfahren zur Analyse analysiert. Anschließend wird wenigstens eine Herstellungsbedingung zum Herstellen der Elektrodenschicht basierend auf einem ersten und/oder zweiten Qualitätswert angepasst.

Die erfindungsgemäße Herstellungseinheit zum Herstellen eines Batteriespeichers umfasst eine Elektrodenschichtherstellungseinrichtung mit einer dielektrischen Spektroskopie-Einheit und eine Recheneinheit, welche eingerichtet ist zum Ausführen des Verfahrens zur Analyse der Roh-Suspension.

Das erfindungsgemäße Computerprogrammprodukt, welches direkt in einen Speicher einer programmierbaren Recheneinheit ladbar ist, umfasst Programmcode-Mittel, um das erfindungsgemäße Verfahren zur Analyse einer Roh-Suspension für eine Elektrodenschicht auszuführen, wenn das Computerprogrammprodukt in der Recheneinheit ausgeführt wird.

Vorteilhaft ist es mit dem erfindungsgemäßen Verfahren zur Analyse möglich, bereits die Roh-Suspension, welche auch Paste oder engl. "Slurry" genannt werden kann, für eine Elektrodenschicht bereits online, also während des Herstellungsprozesses, zu analysieren. Das ermöglicht vorteilhaft, schnell auf unerwünschte Abweichungen von einem gewünschten Qualitätswert zu reagieren, um die Qualität der Elektrodenschicht, welche aus der Roh-Suspension hergestellt wird, zu gewährleisten. Das Gewährleisten der Qualität der Elektrodenschicht wiederum reduziert vorteilhaft den Ausschuss, welcher bei den Batteriezellen in der Herstellung produziert wird.

In einer vorteilhaften Ausgestaltung und Weiterbildung der Erfindung wird als erster Qualitätswert eine Leitfähigkeit oder ein Durchmischungswert verwendet. Vorteilhaft kann basierend auf der dielektrischen Eigenschaft der Roh-Suspension ein Rückschluss auf eine Leitfähigkeit oder den Durchmischungswert erfolgen. Es ist vorteilhaft, dass für ein Messen der Leitfähigkeit die Elektroden der dielektrischen Spektroskopie-Einheit elektrisch isoliert ausgestaltet sind.

In einer weiteren vorteilhaften Ausgestaltung und Weiterbildung der Erfindung wird die die elektrische Eigenschaft mittels der dielektrischen Spektroskopie-Einheit in einem Mischbehälter für die Roh-Suspension vor dem Aufbringen der Roh-Suspension als Elektrodenschicht auf ein Substrat und/oder in einer Zuleitung vor dem Aufbringen der Elektrodenschicht auf ein Substrat gemessen.

Vorteilhaft kann somit bereits deutlich vor dem Aufbringen der Roh-Suspension auf das Substrat die dielektrische Eigenschaft, und darauf basierend der erste Qualitätswert der Roh-Suspension, ermittelt werden. Dies ermöglicht vorteilhaft, dass bei einer zu großen Abweichung des ersten Qualitätswerts, insbesondere von einem Referenzwert, die Durchmischungsbedingungen verbessert werden. Diese ermöglicht vorteilhaft das Verringern des Ausschusses von Batteriezellen mit Elektrodenschichten, welche die Anforderungen an den Qualitätswert nicht erfüllen. Insbesondere das Anbringen der Spektroskopie-Einheit in einer Zuleitung ermöglicht das vollständige Prüfen der Roh-Suspension, da die gesamte Roh-Suspension an der Spektroskopie-Einheit vorbeigeführt wird.

In einer weiteren vorteilhaften Ausgestaltung und Weiterbildung der Erfindung wird ein zeitlicher Verlauf der dielektrischen Eigenschaft aufgenommen. Vorteilhaft können somit der Mischungsfortschritt und die Materialqualität der Roh-Suspension bewertet werden. Zunächst liegen zu Beginn des Mischvorgangs pulverförmige und flüssige Rohstoffe sortenrein im Mischbehälter vor. Wird eine in dem Mischbehälter angeordnete Spektroskopie-Einheit fortlaufend mit den Rohmaterialien umspült, werden diese zunächst in wechselnder Reihenfolge an der Spektroskopie-Einheit analysiert. Die Messwerte unterliegen somit starken Schwankungen. Mit fortschreitendem Mischprozess wird das Gemisch homogener und das Mess-Signal der Spektroskopie-Einheit wird somit ebenfalls konstanter. Bei Erreichen einer möglichst gleichmäßigen Durchmischung ist das Mess-Signal der Spektroskopie-Einheit dann annähernd konstant.

In einer weiteren vorteilhaften Ausgestaltung und Weiterbildung der Erfindung erfolgt das Ermitteln des ersten Qualitätswerts mittels einer ersten KI-Engine.

Im Zusammenhang mit der Patentanmeldung kann unter einer KI-Engine ein Computersystem verstanden werden, welches eine "Anwendung", also eine ausführbare Datei oder auch eine Programmbibliothek, umfasst, welche mittels Künstlicher Intelligenz (KI) insbesondere Korrelationen unterschiedlicher Eingabedaten erlernt.

Die KI-Engine weist eine Ausführungsumgebung auf. Im Zusammenhang mit der Patentanmeldung kann unter einer Ausführungsumgebung eine virtuelle Maschine, beispielsweise eine Java Virtual Machine, ein Prozessor oder eine Betriebssystemumgebung verstanden werden. Die Ausführungsumgebung kann auf einer physikalischen Recheneinheit (Prozessor, Mikrocontroller, CPU, CPU Core) realisiert sein. Dabei kann die Ausführung der Anwendung in einem Lernmodus und in einem Ausführungsmodus auf derselben physikalischen Recheneinheit erfolgen. Ebenso ist es beispielsweise möglich, dass die Ausführung der Anwendung in einem Lernmodus in einer anderen physikalischen Recheneinheit erfolgt. So kann z.B. das Anlernen beispielsweise in einer speziellen Anlern-Recheneinheit erfolgen. Die Ausführung in einem Ausführungsmodus erfolgt beispielsweise in einer zweiten Recheneinheit, wobei die beim Anlernen ermittelte Gültigkeitsinformation bei der Ausführung in der Ausführungs-Recheneinheit verwendet wird. Die durch die Anlern-Recheneinheit beispielsweise ermittelte Gültigkeitsinformation wird vorzugsweise manipulationsgeschützt bereitgestellt. Vorteilhaft erfolgt das Auswerten der Messdaten der dielektrischen Spektroskopie-Einheit somit automatisiert. Vorteilhaft ist ein Eingreifen eines Menschen somit nicht mehr nötig. Das ermöglicht das Verarbeiten sehr großer Datenmengen. Weiterhin ist es vorteilhaft möglich, eine Auswertung sehr schnell vornehmen zu können.

In einer vorteilhaften Ausgestaltung und Weiterbildung der Erfindung wird zum Trainieren der ersten KI-Engine und/oder einer zweiten KI-Engine die Elektrodenschicht, welche aus der Roh-Suspension hergestellt wurde, in den Batteriespeicher eingebracht. Der Batteriespeicher wird in Betrieb genommen und die Betriebsdaten des Batteriespeichers werden ermittelt. Diese Betriebsdaten werden mit der korrelierenden dielektrischen Eigenschaft der Roh-Suspension oder dem korrelierenden zeitlichen Verlauf der dielektrischen Eigenschaft zu einem Vergleichswert zusammengeführt. Besonders vorteilhaft wird die erste und/oder die zweite KI-Engine trainiert, den Vergleichswert einem ersten Qualitätswert und/oder einem zweiten Qualitätswert zuzuordnen. Als zweiter Qualitätswert wird ein Alterungsverhalten, eine Kapazität und/oder ein Innenwiderstand des Batteriespeichers verwendet.

Vorteilhaft wird der erste und/oder zweite Qualitätswert somit nicht nur basierend auf einzelnen Grenzwerten für die dielektrischen Eigenschaften der Roh-Suspension ermittelt, sondern vorteilhaft werden Betriebswerte der vollständig gefertigten Batteriezellen in die Bewertung des ersten und/oder zweiten Qualitätswerts einbezogen. In anderen Worten geht alternativ oder zusätzlich zu Grenzwerten, welche für die dielektrische Eigenschaft festgelegt wurden, in das Bewerten des ersten und/oder zweiten Qualitätswert ein, ob die analysierten dielektrischen Eigenschaften mit qualitativ hochwertigen Betriebsdaten, insbesondere einer hohen Kapazität, zusammenhängen.

Wurde die erste und/zweite KI-Engine mit den Betriebsdaten trainiert, so ist es nun vorteilhaft möglich schon anhand der dielektrischen Eigenschaft der Roh-Suspension einen Qualitätswert mittels der KI-Engine zu bestimmen und zu bewerten, ohne für diese Batteriezelle eine Inbetriebnahme durchführen zu müssen. Somit kann frühzeitig entschieden werden, ob diese Elektrodenschicht in eine Batteriezelle eingebaut wird bzw. ob diese Elektrodenschicht in der Batteriezelle mit in einen größeren Energiespeicher eingebaut wird. Vorteilhaft wird so der Anteil des Ausschusses durch eine Analyse, welche schon während der Elektrodenschicht-Herstellung stattfindet, erniedrigt. Dies führt vorteilhaft zu einer deutlich erhöhten Effizienz des Herstellungsprozesses.

Weiterhin kann vorteilhaft frühzeitig erkannt werden, wenn die dielektrische Eigenschaft der Roh-Suspension zu einer mangelhaften Elektrodenschicht führen würde. In anderen Worten wäre der erste und/oder zweite Qualitätswert eine mangelnde Qualität der Roh-Suspension für die Elektrodenschicht erfassen. In diesem Fall werden die Herstellungsbedingungen für die Roh-Suspension, insbesondere Temperaturen, Lösungsmittelanteil in der Roh-Suspension, oder die Mengenverhältnisse der einzelnen Komponenten der Roh-Suspension angepasst. Vorteilhaft kann somit sehr schnell und frühzeitig im Prozess der Elektrodenschichtherstellung gewährleistet werden, dass die Ausgangssubstanz, nämlich die Roh-Suspension, eine ausreichend hohe Qualität aufweist, um eine qualitativ hochwertige Elektrodenschicht für den Einsatz in einem Batteriespeicher herzustellen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Herstellungseinheit mit einer Elektrodenschichtherstellungseinrichtung mit einer dielektrischen Spektroskopie-Einheit und einer Recheneinheit;
- Figur 2: eine Elektrodenschichtherstellungseinrichtung und zwei Batteriezellen;
- Figur 3: ein Verfahrensschema zur Analyse der Roh-Suspension für eine Elektrodenschicht eines Batteriespeichers.

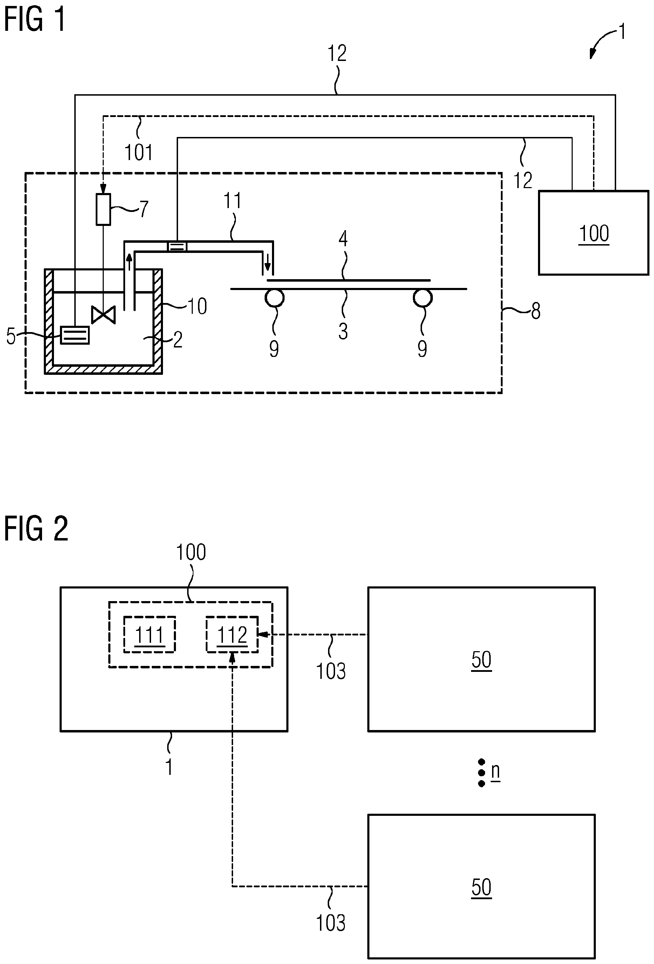

Figur 1 zeigt eine Herstellungseinheit 1. Die Herstellungseinheit 1 umfasst eine Elektrodenschichtherstellungseinrichtung 8 und eine Recheneinheit 100. Die Elektrodenschichtherstellungseinrichtung 8 umfasst ein Trägersubstrat 3 auf das eine Elektrodenschicht 4 aus einer Elektroden-Rohsuspension 2 (engl.: Slurry) aufgebracht wird. Die Roh-Suspension 2 für die Elektrodenschicht 4 wird in einem Mischbehälter 10 mittels eines Rührwerks 7 homogenisiert.

In dem Mischbehälter 10 ist eine erste dielektrische Spektroskopie-Einheit 5 angeordnet. In diesem Beispiel befindet sich die erste dielektrische Spektroskopie-Einheit 5 am Randbereich des Mischbehälter 10. Es ist alternativ ebenso denkbar, die dielektrische Spektroskopie-Einheit 5 zentral im Mischbehälter 10 oder an Orten, wie den Toträumen in den Ecken des Mischbehälter 10 anzuordnen.

Die Roh-Suspension 2 wird über eine erste Leitung 11 auf das Trägersubstrat 3 aufgebracht. In diesem Beispiel ist in der ersten Leitung 11 eine zweite dielektrische Spektroskopie-Einheit 6 angeordnet. Diese gewährleistet, dass die gesamte Roh-Suspension 2, bevor sie auf das Trägersubstrat 3 aufgebracht wird, analysiert wird. In Figur 1 wird die Ausrichtung der Elektroden der dielektrischen Spektroskopie-Einheit durch parallele Striche verdeutlicht.

Die ermittelten Messdaten werden über Datenleitungen 12 an eine Recheneinheit 100 übermittelt. In der Recheneinheit 100 wird ein erster Qualitätswert, welcher insbesondere die Leitfähigkeit oder die Homogenität der Roh-Suspension 2 beschreibt, ermittelt. In diesem ersten Beispiel kann dieser Qualitätswert mit einem Referenz-Qualitätswert verglichen werden. Weicht der ermittelte Qualitätswert über einen Grenzwert des Referenzwertes hinaus ab, so kann insbesondere die Rühr-Geschwindigkeit des Rührwerks 7 verändert werden. Alternativ kann die Mischzeit verändert werden. Es ist ebenso denkbar, die Temperatur der Roh-Suspension 2 zu verändern, um den Qualitätswert zu korrigieren.

Die Auswahl technischer Parameter der dielektrischen Spektroskopie-Einheit, wie insbesondere einer Unterbringung des Sensors in elektrisch isolierenden Schutzelementen, die Verwendung unterschiedlicher Messfrequenzen, oder die Wahl der Elektrodenform, kann eine Messung unterschiedlicher technischer Eigenschaften des zu untersuchenden Slurry ermöglichen. Insbesondere erlaubt die elektrische Isolation der Elektroden der Spektroskopie-Einheit den Einsatz eines leitfähigen Mediums. Weiterhin erlaubt die Variation der Messfrequenz der dielektrischen Spektroskopie-Einheit eine Messung, die in bestimmten Frequenzbereichen mit der Elektroimpedanzspektroskopie vergleichbar ist. Für beide Sensoren wird eine Antwort des zu messenden Systems auf eine elektrische Schwingungsanregung bei unterschiedlichen Frequenzen analysiert. Bei der Elektroimpedanzspektroskopie wird allerdings typischerweise im Stand der Technik die vollständige Impedanz, also inklusive der Stromleitfähigkeit, einer fertig produzierten Batteriezelle ermittelt.

Vorteilhaft wird beim Messen des Slurry mit der die elektrischen Spektroskopie-Einheit, wie in diesem ersten Beispiel dargestellt, bereits während des Herstellungsverfahrens eine Änderung der dielektrischen Eigenschaften der Roh-Suspension ermittelt. Vorteilhaft können die Herstellungsbedingungen in diesem Fall noch verändert werden.

Durch den Einsatz der dielektrischen Spektroskopie-Einheit kann ebenfalls ermittelt werden, ob die Materialien der Roh-Suspension nicht nur vermischt, sondern auch mechanisch beschädigt wurden. Je nach gewählter Messfrequenz der Spektroskopie-Einheit kann dies eine Änderung der Anregungsantwort, also der die elektrischen Eigenschaften der Roh-Suspension, zur Folge haben.

Eine alternative oder zusätzliche Möglichkeit ist es, wie in Figur 2 gezeigt, die Recheneinheit 100 um eine erste KI-Engine 111 und eine zweite KI-Engine 112 zu erweitern oder, hier nicht gezeigt, zu ersetzen. Diese KI-Engines 111, 112 können mittels Betriebsdaten aus Batteriespeichern 50, welche Batteriezellen umfassen, in welche die Elektrodenschichten 4 eingebracht wurden, trainiert werden. Basierend auf den Betriebsdaten kann der erste Qualitätswert bewertet werden oder ein zweiter Qualitätswert, welche die Qualität des Batteriespeichers 50 beschreibt, ermittelt werden. Dafür werden die Betriebsdaten 103 mit der dielektrischen Eigenschaft der Roh-Suspension 2 oder dem zeitlichen Verlauf der die elektrischen Eigenschaft zu einem Vergleichswert zusammengeführt. Dem Vergleichswert wird dann durch die KI-Engine 111, 112 ein erster Qualitätswert und/oder ein zweiter Qualitätswert zugeordnet. In anderen Worten kann die erste KI-Engine 111, nachdem sie mit Betriebsdaten von Batteriespeichern trainiert wurde, Aussagen über die Qualität der dielektrischen Eigenschaften wie insbesondere Leitfähigkeit oder Homogenitätswert der Roh-Suspension, treffen. Es kann aber mittels der zweiten KI-Engine 112 auch ermittelt werden, ob die dielektrischen Eigenschaften der Rohsuspension mit einer hohen Qualität des Batteriespeichers 50 einhergehen werden.

Vorteilhaft ist es somit möglich, mittels des Einsatzes der KI-Engines 111, 112 schon sehr frühzeitig, nämlich während des Herstellungsverfahrens, Aussagen über die spätere Qualität des Batteriespeichers 50 treffen zu können. Als Folge der Analyse ist es dann möglich, in das Herstellungsverfahren einzugreifen. Alternativ oder zusätzlich ist es möglich, Elektrodenschichten 4, welche aus der Roh-Suspension 2 hergestellt wurden und die Anforderungen an den Qualitätswert nicht erfüllen, zu verwerfen, um den Ausschuss der Batteriezellen der Batteriespeicher 50 zu minimieren.

Vorteilhaft können Betriebsdaten von Batteriespeichern 50 mit in die Ermittlung und/oder Bewertung des Qualitätswerts eingebracht werden, ohne dass jede Elektrodenschicht 4 bereits in eine Batteriezelle eingebaut werden müsste.

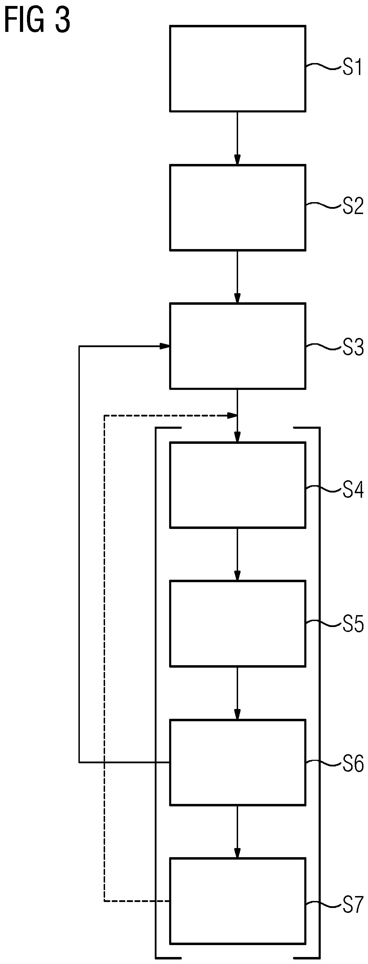

Figur 3 zeigt ein Verfahrensschema zur Analyse der Roh-Suspension 2 für eine Elektrodenschicht 4 eines Batteriespeichers 50. In einem ersten Schritt S1 erfolgt das Bereitstellen einer dielektrischen Spektroskopie-Einheit 5, 6. In einem zweiten Schritt S2 erfolgt das Messen einer ersten dielektrischen Eigenschaft der Roh-Suspension. Basierend darauf werden Messdaten erzeugt und an eine Recheneinheit 100 übermittelt. In einem dritten Schritt S3 erfolgt das Ermitteln eines ersten Qualitätswerts der Roh-Suspension 2 in Abhängigkeit der Messdaten der ersten dielektrischen Eigenschaft der Roh-Suspension 2. Es ist möglich, das Ermitteln des ersten Qualitätswerts basierend auf einem Vergleich zu einem Referenz-Qualitätswert durchzuführen.

Es ist alternativ oder zusätzlich ebenso möglich eine KI-Engine 111, 112 zu trainieren, um das Ermitteln und/oder Bewerten des ersten Qualitätswerts durchzuführen. In diesem Fall folgt der optionale vierte Schritt S 4 zum Trainieren einer KI-Engine 111, 112, nämlich das Einbringen der Elektrodenschicht 4, welche auf der Roh-Suspension 2 basiert, in einen Batteriespeicher 50. In einem fünften Schritt S5 erfolgt dann das Ermitteln von Betriebsdaten des Batteriespeichers 50. In einem sechsten Schritt S6 werden die Betriebsdaten des Batteriespeichers 50 mit der korrelierenden dielektrischen Eigenschaft der Roh-Suspension 2 oder einem korrelierenden zeitlichen Verlauf der dielektrischen Eigenschaft zu einem Vergleichswert zusammengefasst. Basierend auf dem Vergleichswert kann nun in einem siebten Schritt S7 ein zweiter Qualitätswert, welche die Qualität des Batteriespeichers 50 beschreibt, ermittelt werden und oder der erste Qualitätswert bewertet werden. Es ist alternativ oder zusätzlich möglich, den Vergleichswert zum Ermitteln des ersten Qualitätswerts im dritten Schritt S3 zu verwenden. In anderen Worten erfolgt das Ermitteln des ersten Qualitätswerts in dem dritten Schritt S3 dann mittels der trainierten KI Engine 111.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Herstellungseinheit
- 2: Roh-Suspension (Slurry)
- 3: Trägersubstrat
- 4: Elektrodenschicht
- 5: erste dielektrische Spektroskopie-Einheit
- 6: zweite dielektrische Spektroskopie-Einheit
- 7: Rührwerk
- 8: Elektrodenschichtherstellungseinrichtung
- 9: Transportrollen
- 10: Mischbehälter
- 11: erste Leitung
- 12: Datenleitung
- 50: Batteriespeicher
- 100: Recheneinheit
- 101: erstes Steuersignal
- 103: Betriebsdaten
- 111: erste KI-Engine
- 112: zweite KI-Engine
- S1: Bereitstellen einer dielektrischen Spektroskopie-Einheit
- S2: Messen einer ersten dielektrischen Eigenschaft der Roh-Suspension, erzeugen von Messdaten und übermitteln der Messdaten an eine Recheneinheit
- S3: Ermitteln eines ersten Qualitätswerts der Roh-Suspension in Abhängigkeit der Messdaten der ersten dielektrischen Eigenschaft der Roh-Suspension
- S4: Einbringen der Elektrodenschicht basierend auf der Roh-Suspension in einen Batteriespeicher
- S5: Ermitteln von Betriebsdaten des Batteriespeichers
- S6: Zusammenführen der Betriebsdaten mit der korrelierenden dielektrischen Eigenschaft der Roh-Suspension oder einem korrelierenden zeitlichen Verlauf der dielektrischen Eigenschaft zu einem Vergleichswert in einer ersten und/oder zweiten KI-Engine zum Trainieren der KI-Engine
- S7: Ermitteln eines zweiten Qualitätswerts

## Patentansprüche

1. Verfahren zur Analyse einer Roh-Suspension (2) einer Elektrodenschicht (4) eines Batteriespeichers (50) mit folgenden Schritten:
- Bereitstellen einer dielektrischen Spektroskopie-Einheit (5, 6) zum Messen dielektrischer Eigenschaften der Roh-Suspension (2),
- Messen einer ersten dielektrischen Eigenschaft der Roh-Suspension (2), Erzeugen von Messdaten und Übermitteln der Messdaten an eine Recheneinheit (100),
- Ermitteln eines ersten Qualitätswerts der Roh-Suspension (2) in Abhängigkeit der Messdaten der ersten dielektrischen Eigenschaft der Roh-Suspension (2) in der Recheneinheit (100) .

2. Verfahren nach Anspruch 1, wobei der erste Qualitätswert eine Leitfähigkeit oder einen Durchmischungswert darstellt.

3. Verfahren nach Anspruch 1 oder 2, wobei die dielektrische Eigenschaft mittels der dielektrischen Spektroskopie-Einheit (5) in einem Mischbehälter (10) für die Roh-Suspension (2) vor dem Aufbringen der Elektrodenschicht (4) auf ein Substrat (3) gemessen wird.

4. Verfahren nach einem der vorhergehenden Ansprüche, wobei die dielektrische Eigenschaft mittels der dielektrischen Spektroskopie-Einheit (6) in einer Zuleitung (11) vor dem Aufbringen der Elektrodenschicht (4) auf ein Substrat (3) gemessen wird.

5. Verfahren nach einem der vorhergehenden Ansprüche, wobei ein zeitlicher Verlauf der dielektrischen Eigenschaft aufgenommen wird.

6. Verfahren nach einem der vorhergehenden Ansprüche, wobei das Ermitteln des Qualitätswerts mittels einer ersten KI-Engine (111) computergestützt erfolgt.

7. Verfahren nach einem der vorhergehenden Ansprüche, wobei zum Trainieren der ersten KI-Engine (111) und/oder einer zweiten KI-Engine (112) die Elektrodenschicht (4) in den Batteriespeicher (50) eingebracht wird, der Batteriespeicher (50) in Betrieb genommen wird, Betriebsdaten des Batteriespeichers (50) ermittelt werden, diese Betriebsdaten mit der korrelierenden dielektrischen Eigenschaft der Roh-Suspension (2) oder dem korrelierenden zeitlichen Verlauf der dielektrischen Eigenschaft zu einem Vergleichswert zusammengeführt werden.

8. Verfahren nach Anspruch 6, wobei die zweite KI-Engine (112) trainiert wird, dem Vergleichswert den ersten Qualitätswert und/oder einen zweiten Qualitätswert zuzuordnen.

9. Verfahren nach einem der vorhergehenden Ansprüche, wobei als zweiter Qualitätswert ein Alterungsverhalten, eine Kapazität und/oder ein Innenwiderstand des Batteriespeichers (50) verwendet wird.

10. Herstellungsverfahren eines Batteriespeichers (50) mit folgenden Schritten:
- Analysieren der Roh-Suspension (2) für eine Elektrodenschicht (4) für einen Batteriespeicher (50) gemäß einem Verfahren nach einem der Ansprüche 1 bis 9,
- Anpassen wenigstens einer Herstellungsbedingung zum Herstellen der Elektrodenschicht (4) basierend auf wenigstens dem ersten und/oder zweiten Qualitätswert.

11. Herstellungsverfahren nach Anspruch 10, wobei als Herstellungsbedingungen Temperaturen, Lösungsmittelanteil der Roh-Suspension angepasst werden.

12. Herstellungseinheit (1) zum Herstellen eines Batteriespeichers (50) umfassend:
- eine Elektrodenschichtherstellungseinrichtung (8) mit einer dielektrischen Spektroskopie-Einheit (5, 6),
- eine Recheneinheit (100) eingerichtet zum Ausführen des Verfahrens gemäß einem der Ansprüche 1 bis 9.

13. Computerprogrammprodukt, welches direkt in einen Speicher einer programmierbaren Recheneinheit (100) ladbar ist, mit Programmcode-Mitteln, um ein Verfahren nach einem der Ansprüche 1 bis 9 auszuführen, wenn das Computerprogrammprodukt in der Recheneinheit (100) ausgeführt wird.
